# EUROPEAN PATENT APPLICATION

(11) **EP 1 207 386 A1**
(43) Date of publication of application: **22.05.2002**
(21) Application number: 00125189.1
(22) Date of filing: 20.11.2000
(51) Int. Cl.: G01N 21/57

(54) **Method for characterizing the appearance of a particular object, for predicting the appearance of an object, and for manufacturing an object having a predetermined appearance which has optionally been determined on the basis of a reference object**

(71) Applicant: THE DOW CHEMICAL COMPANY, Midland, Michigan 48674 (US)
(72) Inventor: Torfs, Jan C., 4535 EJ Terneuzen (NL); Brands, Gerrit J., 4535 BX Terneuzen (NL); Goethals, Eric G., 8000 Brugge (BE); Dedeyne, Evelien M.T.M., 9820 Merelbeke (BE)
(74) Representative: Patentanwälte Schaad, Balass, Menzl & Partner AG

(57) **Abstract**

The invention relates to a method for characterizing the appearance of a particular object, for predicting the appearance of an object, and for manufacturing an object having a predetermined appearance which has optionally been determined on the basis of a reference object. According to the invention, use is made of a viewing and illumination angle-dependent surface reflection k₁(w,h,i) and a viewing and illumination angle-dependent reflectance value R (w, h, i).

## Description

The invention relates to a method for characterizing, by means of a measurement, the appearance of an object, more particularly, to a method for characterizing the contribution of the surface to the appearance of an object and for predicting what the appearance of an object will be when manufactured from a predetermined material with a predetermined surface texture.

Nowadays, many products are manufactured from plastic. These products have a particular appearance. 'Appearance' is herein understood to mean the manner in which, in combination, the color and surface texture of the object are perceived by the human eye. The appearance will in general be different when the sample is rotated relative to illumination and/or observer. This is caused by a complex of factors, such as the kind of material of which the object is manufactured, manufacturing conditions, the colorants (concentrations and types) used in the material, and the surface texture of the object.

Often, the surface texture is one factor considered when an object is to be manufactured. It may, for instance, be required that the surface texture has a leather-like character, such as used in interiors of cars. This surface texture, however, then has as a side-effect that it also affects the appearance.

There is technology for predicting what the color of an object will be, (see: Practical Color Measurement, Anni-Berger-Schunn, Joseph W. Goodman, ed. J. Wiley, New York, 1994) based on the kind of material (often plastics such as polymers) and the colorants used for manufacturing the object.

A leading theory, with corresponding equations, which is used to match color is referred to as Kubelka-Munk. Many improved theories have been derived based on this theory. The Kubelka-Munk theory is derived based on the illumination being diffuse, which can be understood as light coming from all angles simultaneously. The experimental technique to create such an illumination uses a so-called integrating sphere and the data measured on such equipment is treated using the Kubelka-Munk theory. Therefore, in general, color matching is done using such equipment. In a spectrophotometer, the detector is usually placed in this integrating sphere at an angle of zero or 8 degrees relative to the perpendicular to the sample to be measured. For the user of such equipment, there is little practical possibility to change angles of viewing or illumination in this equipment. Therefore, the reflectance values measured in this classical way are considered angle-independent. This is essentially true, although in principle, a redesign of these spectrophotometers with a different viewing angle may lead to a slightly different reflectance value.

The kind of plastic in its natural state and color, as well as the colorants mentioned, then serve as a basis in Kubelka-Munk theory for the prediction of an object's final appearance. However, this prediction is often poorly related to visual perception. For example, the effect of gloss on appearance is often not or poorly predicted, and also the effect of changes in illumination and/or viewing angle relative to the surface is not predicted. The integrating sphere used in the Kubelka-Munk (K-M) theory in general masks the effects of gloss and texture (i.e., surface effects) to a large extent. Thus, neither the K-M theory, as used today, nor its associated measurement is able to predict gloss and texture effects. However, these properties have a pronounced effect on how objects appear. As a consequence, use of the known art of color prediction in general predicts a color that is totally different from the appearance as seen by the human eye. This is particularly true when attempting to match the color and appearance of different materials.

For example, when a color standard made in polypropylene is used to match a sample to be formulated in a different material, for example ABS (Acrylonitrile Butadiene Styrene copolymer) a predicted formulation using existing color formulation techniques will almost always lead to a visibly unacceptable match. It happens frequently that the measurement of the standard and formulated sample with such equipment indicates that a color difference is small or negligible whereas visible differences are clearly much larger and often unacceptable. Another related problem is that while a visible match can be obtained under one viewing angle, rotation of the sample and reference material may lead to visible appearance differences at some other angles.

More particularly, this means, for instance in the car industry, that it is not easy to manufacture two or more plastic objects having the same appearance such as matching the appearance of one part of a dashboard with the appearance of another part of the dashboard made of another material. Thus, an observer notices appearance differences. Nor, generally, does it prove to be possible to give, for instance, the dashboard the same appearance as the leather upholstery of a seat. In this case, too, a user of the car notices appearance differences. As mentioned, there are techniques known per se for measuring the color of an object, such as the seat with leather upholstery. This technology can also be used to predict what the effects will be of the choice of a particular plastic and colorants on the color of an object to be manufactured. In this way, with existing techniques, an object can be manufactured which, as regards its color, corresponds as best as possible with the color of the reference object, such as the leather-upholstered seat mentioned. It has been found, however, that the user still notices appearance differences. One object of the invention is to provide a solution to this problem.

An object of the invention is to provide a solution to the problems outlined above. In the present invention, illumination is not diffuse but directional, and the angle of illumination is a variable leading to completely different observed or measured results. Also, viewing angle can be chosen by the user and is a variable which may have significant effect on the result. Here, measured Reflectance data are strongly dependent on these angles (i.e., are "angle dependent"), and are related to the observed appearance. In contrast, angle independent systems or, fixed angle systems, do not allow to describe, measure or predict the appearance as observed under a variety of conditions, which are met in practice.

Accordingly, in a first aspect, the present invention is a method for characterizing the contribution of the surface to the appearance of an object. This method is characterized in that the surface contribution to appearance, or the surface reflection k₁(w,h,i), is calculated from at least one reflectance value Rm(w,h,i) which is measured for at least one light frequency w ; a predetermined viewing angle (h); and an illumination angle (i). The calculation of k₁(w,h,i) from Rₘ(w,h,i) involves the use of the color determining parameters of the material. Preferably, k₁(w,h,i) is calculated at a range of wavelengths, w, covering the visible spectrum, and a series of viewing angles and illumination angles, in order to have a more or less complete description of the surface contribution to the appearance. Once the surface contribution to the appearance has been determined, the appearance of the sample to the reference material can be subsequently matched.

The invention is based inter alia on the insight that the appearance of the object depends not only on colorant loading and base material, but also on the angle (h) at which the object is viewed by the human eye and the condition of illumination of the object.

According to the present invention, the effect that the viewing angle (h) and illumination angle (i) have on the surface texture and hence the appearance of an object is taken into account.

What is particular about this further elaboration of the invention is that use is made of formulae in which originally the surface reflection k₁(w) was assumed to be independent of the viewing and illumination angle (h),(i). The formulae are generally based on an illumination that is an average of the individual illuminations at a plurality of the different illumination angles. This is called diffuse illumination that is obtained with an integrating sphere. (See: Practical color Measurement by A Berger-Schunn page 114. Or: Judd, Wyszecki, Color in business, science and Industry, J. Wiley, New York, 1975, p 420 - 461). In the present invention, however, the formulae known per se (or future formulae still to be developed) are used for determining, for each predetermined viewing angle (h) predetermined illumination angle (i), what the surface reflection k₁(w,h,i) is for these angles. It has been found that in this way these formulae can be used particularly well for characterizing the appearance of an object as well as, as will be explained hereinafter, for predicting what the appearance of an object will be. Because in that case both the characterization of the appearance of a (reference) object and the subsequent prediction of the appearance of an object (to be manufactured) can be carried out well, the appearance match can be carried out such that the match of the appearance at at least one viewing angle under the condition of illumination under at least one associated illumination angle, but preferably also at a plurality of viewing angles (h) each associated with at least one predetermined illumination angle, is better than in the known techniques. There is more than one color theory. The invention is not limited to an equation of a specific color theory.

Preferably, a plurality of reflectance values R(w,h,i) for a plurality of sets of (h,i) of viewing and illumination angles wherein each set comprises a viewing angle (h) and at least one predetermined associated illumination angle (i) are measured and a plurality of reflection values k₁(w,h,i) corresponding with the respective measured reflectance values R(w,h,i) are calculated.

In that case preferably the surface reflections k₁(w,h,i) associated with the plurality of predetermined viewing angles and the plurality of predetermined illumination angles are calculated by solving said equation for each value of Rm(w,h,i) associated with these predetermined viewing and illumination angles and the value of Rᵢ(w).

In particular, the object has a black color for determining the surface reflection k₁(w,h,i). In that case, the surface reflection has, with respect to the color of the object, a relatively great influence on the appearance, and can therefore be accurately determined in an easy manner.

According to the invention, an object's appearance is characterized by color determining parameters of the material, which are dependent on the kind of material and the optional colorants from which the object is manufactured, and the value of the surface reflection k₁(w,h,i) for the predetermined viewing angle(s) (h) under the condition of illumination at predetermined illumination angle(s) (i). Preferably, this method is further characterized in that based on the color determining parameters of the material from which the object is manufactured and on the basis of a plurality of reflection values k₁(w,h,i), sets (h,i) of viewing and illumination angles wherein each set comprises a viewing angle (h) and at least one associated illumination angle (i), it is predicted what the appearance of the object will be such as it is observed for the plurality of sets (h,i) of predetermined viewing and illumination angles.

Combining the method according to the invention for characterizing the appearance of an object on the one hand and predicting the appearance of an object on the other hand provides a sound basis for appearance matching.

Such a method for making a choice of a type and amount of colorants and/or other additives and/or a choice of a kind of material and/or a choice of surface texture, and/or a choice of a manufacturing process and conditions for manufacturing an object, such that when an object is manufactured on the basis of the choice made, this object, measured from at least one predetermined viewing angle (h) under the condition of illumination under at least one predetermined illumination angle (i), has at least one predetermined reflectance value Rm_{ref}(w,h,i) or a range of reflectance values at a range of wave lengths associated with these angles, comprises at least the following steps: A. as a first choice a surface contribution to appearance or at least one surface reflection k₁(w,h,i) for the object is set for at least one predetermined viewing angle (h) under the condition of illumination under at least one predetermined illumination angle (i); B. a first choice is made of the amount and type of colorants and/or other additives from which the object is manufactured; C. based on the surface contribution to appearance or the reflection value (s) k₁(w,h,i), the already chosen kind of material and the choice of the amount and type of colorants and/or additives, it is predicted what the reflectance value(s) Rₚ(w,h,i) associated with the predetermined viewing angle (s) (h) under the condition of illumination under the illumination angle (s)(i) would be on the basis of equations of a color theory, which equations have been assumed to be independent of the viewing and the illumination angles and in combination define a relation between the color determining parameters of the material determined by the kind of material and the type and amounts of colorants, an angle independent surface contribution to appearance or an angle-independent surface reflection k₁(w), and the angle-independent reflectance value Rₚ(w), wherein Rₚ(w,h,i) being determined by substituting the angle- independent surface contribution to appearance or k₁(w)= the angle-dependent surface contribution to appearance or k₁(w,h,i) and Rₚ(w)=Rₚ(w,h,i) in these equations and subsequently calculating Rₚ(w,h,i) from this equation on the basis of the angle-dependent contribution to appearance or the surface reflection k₁(w,h,i) and the color determining parameters of the material which are determined by the chosen kind of material and the chosen colorants and/or other additives; D. the predicted reflectance value Rₚ(w,h,i) is compared with the desired reflectance value Rm_{ref}(w,h,i) to obtain information about a difference between the desired appearance and the predicted appearance of the object to be manufactured at the viewing angle (s) (h) under the condition of illumination under the illumination angle (s) (i); and E. on the basis of the difference information, optionally steps B, C and D are repeated for a different choice of colorants.

In this method the surface contribution to appearance or the surface reflection k₁(w,h,i) may be set based on a first choice of material and a surface texture for the object.

The first choice of the surface texture and the first choice of the kind of material may be fixed. In that case the selection of the colorants or other additives is the only variable to carry out the appearance match.

It is however possible that optionally the choice of the surface texture and/or the kind of material of the object to be manufactured is slightly adjusted in view of the difference information, if it shows that the appearance match is not sufficiently close. In such case,, the value of k₁(w,h,i) is determined again according to step A and steps B, C, D and E are repeated. This may in particular be necessary if appearances have to match at a multitude of sets of viewing and illumination angles.

It is however also possible that the first choice of the surface texture and/or the first choice of the kind of material are variables. In that case if it turns out that the appearance is not sufficiently close, it is possible that the choice of the surface texture and/or the kind of material of the object to be manufactured is adjusted in view of the difference information. In such case, the value of k₁(w,h,i) is determined again according to step A and steps B, C, D, and E repeated.

According to a preferred embodiment of the present invention, the predetermined reflectance value(s) Rm_{ref}(w,h,i) is determined on the basis of a reference object as described above.

In this manner an appearance match is obtained between a reference object and an object to be manufactured.

The many aspects of the present invention will be further elucidated with reference to the drawing.

In the drawing:
Fig. 1 shows a flow diagram in which various methods according to the invention are represented;
Fig. 2 schematically shows two observations of the appearance of an object;
Fig. 3 shows a measuring arrangement for determining a reflectance curve of an object.

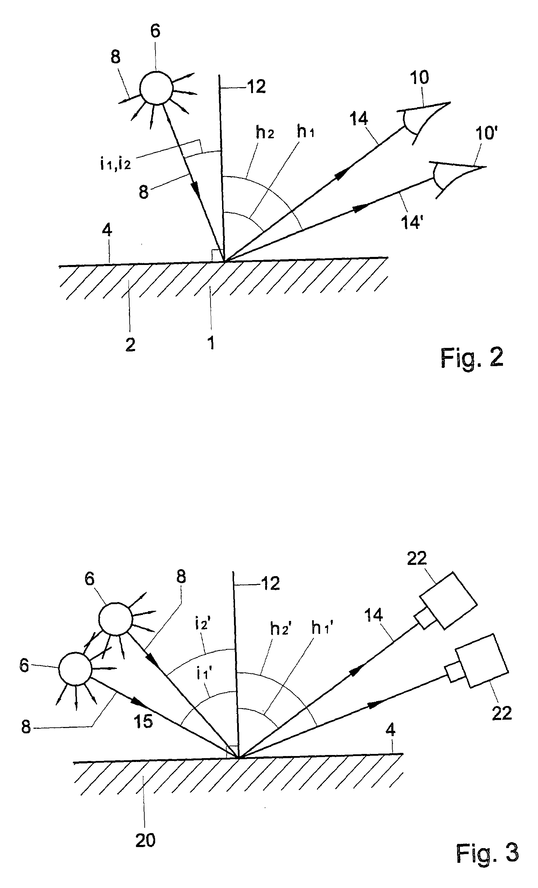

It should be noted that in figure 2 and 3 the plane formed by the illumination and the perpendicular to the surface, does not have to be the same as the plane formed by the viewing position and the perpendicular to the surface, even though the schematic drawings might suggest all these positions to be in one plane.

The present invention is concerned with the appearance of an object, while taking into account the surface texture and/or gloss of the object (i.e., surface properties) as well as the fact that as a consequence of these or other phenomena, the appearance of an object is dependent on the viewing angle (h) and the associated at least one illumination angle (i) under which the object is illuminated. A viewing angle (h) observed at a specific illumination having an illumination angle (i) will be noted as (h,i). A viewing angle observed at multiple illumination angles is also noted as (h,i). In Fig. 2, an object 1 is shown which is manufactured from a polymer or other material 2. The object has a surface 4. In the example, the object is illuminated with a light source 6 under the illumination angle (i₁). This light will reflect and/or scatter on the surface 4 and may be partially re-emitted by the material 2. The resulting total reflected light in the direction h₁ can be observed by an observer 10 located at this viewing angle (h₁). In this example, the viewing angle (h₁) is the angle enclosed between a normal 12 to the surface 4 of the object and the line of view 14 of the observer 10.

The observer 10 will observe the object 1 as having a particular appearance. This appearance can be described as a combination of color (light re-emitted from the inside of the material) and surface reflection and scattering. The appearance is determined by a number of factors. A first factor is the kind of material, e.g., the type of polymer, from which the object is manufactured. A second factor concerns the type of colorants or other additives, and the amount thereof, which may be included in the material of the object. A third factor concerns the surface texture of the surface 4. The present invention takes into account that the surface reflection is dependent on the observing angle (h₁) and the associated at least one illumination angle (i₁). Accordingly, an observer 10' who observes the object at the observing angle (h₂) under the condition of illumination under the illumination angle (i₁) will in general observe a different appearance than does the observer 10. According to the invention, this effect is taken into account inter alia in characterizing the appearance of an object, in predicting the appearance of an object, and in manufacturing an object with a predetermined appearance under predetermined viewing and illumination condition. The method of this invention will allow the appearance of different objects to be matched at the same or different conditions of observation such as when one of the objects is at a different angle than the other object (i.e., one object is rotated in relation to the other object) or the light source at which one object may be viewed is different. More generally, it holds that the object is manufactured such that the appearance of the object to be manufactured and that of the reference object correspond with each other at a plurality of viewing angles (h) each associated with at least one predetermined illumination angle (i).

It is also possible that the appearance of an object can be matched under different conditions of illumination such as different sources of light. For example, it is possible to use diffuse and/or directional light or different colors of light.

In this application R(w,h,i) is the reflectance value for light with frequency (w) at the viewing angle (h) under illumination at illumination angle (i). If there are more than one illumination angles the reflectance value is also noted as R(w,h,i) as discussed for the set (h,i).

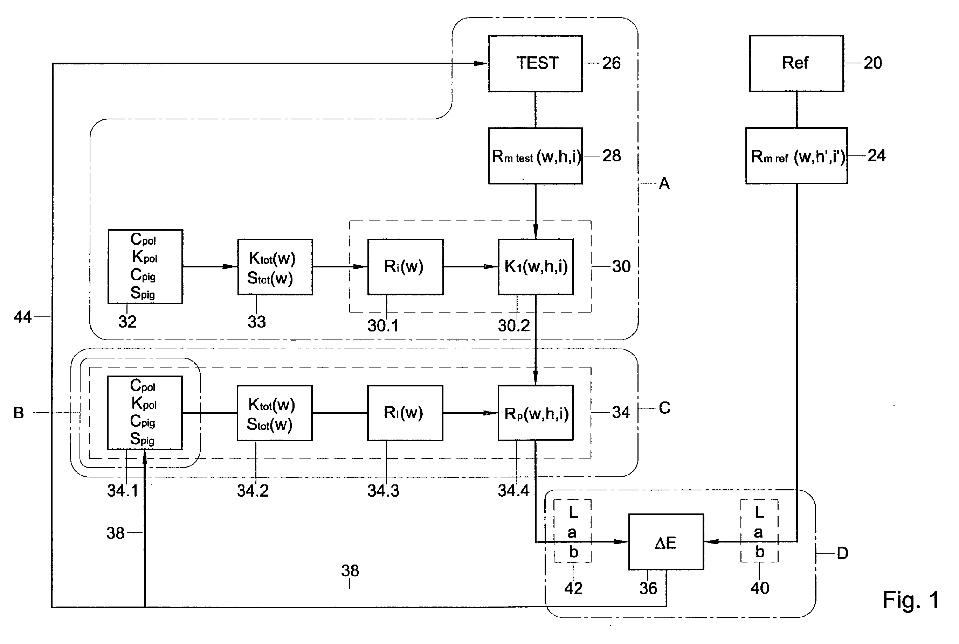

In the flow diagram of Fig. 1, which schematically depicts a preferred embodiment of this invention, block 20 designates a reference object. Optionally, the reference object may not be a physical object but can be a virtual entity characterized by at least one data of Rm_{ref}(w,h,i) for at least one wavelength and viewing and illumination angle. The reference object is also shown in Fig. 3 and designated with reference numeral 20. Using a light sensitive device 22 (Fig. 3) such as a multi-angle spectrophotometer, gonio-spectrophotometer, digital photo camera, video camera or a similar apparatus, a reflectance value Rm_{ref}(w,h',i') (or a similar quantity as produced by the various light sensitive devices) associated with viewing angle(s) (h') under the condition of illumination at predetermined illumination angle(s) (i') is determined. Therefore the appearance of the reference object will be determined for predetermined viewing angle(s) (h') associated with illumination angle(s) (i'). The viewing angle (h') is the angle enclosed between the normal 12 to a surface 4 of the object 20 and an optical axis 14 of the spectrometer.

The illuminated angle (i') is the angle between the optical axes 15 of the light source 6 and the normal 12. In the measuring arrangement according to Fig. 3, for determining the reflectance curve, further use is made of a light source 6 which radiates light 8. The reflectance value Rm_{ref}(w,h',i') is dependent on the viewing angle (h'), the illumination angle (i') and the frequency (w) of the light observed by the spectrometer. In this example all measurements and calculations are carried out for one value of the frequency (w). It is however also possible to do the same measurements and the same calculations for a plurality of values of (w) .

With respect to Fig. 3, instrument manufacturing limitations imply, that the term illumination angle is to be understood as representing illumination with a certain spatial angle around the angle i, but it also includes a set up where illumination is performed by a range of well defined angles i. Also, any observing angle will typically have a certain spatial angle associated with h. This is also noted as the set (h,i).

Returning to Fig. 1, presently in block 24 at least one reflectance value Rm_{ref}(w,h', i') is determined. With reference to the embodiment in Figure 3, two reflectance values R(w,h', i') are determined for h'=h'₁, and h'=h'₂. The reflectance value Rm_{ref}(w,h',i') does not need to be determined for the entire spectrum of visible light. For instance, a number of values of a frequency (w) of the reflected light from the object as received by the spectrometer may suffice. As is obvious, wavelength or angular frequency can be used in place of frequency for the purposes of this invention.

It will presently be explained in what way an object can be manufactured from a predetermined material and with a predetermined surface texture, in order that the object, viewed from at least one predetermined viewing angle (h) under the condition of illumination under at least one predetermined illumination angle (i), has an observed appearance which is at least substantially the same as the observed appearance of the reference object viewed from that same or a different at least one predetermined viewing angle (h') under the condition of illumination under at least one illumination angle (i').

To that end, in block 26 of Fig. 1, a test object 26 is manufactured with a predetermined surface texture corresponding with the material and the predetermined surface texture of the object to be manufactured. Next, in block 28, the reflectance curve Rmₜₑₛₜ(w,h,i) is measured, associated with the viewing angle (h) under the condition of illumination at illumination angle i. The determination of the reflectance curve Rmₜₑₛₜ(w,h,i) can be carried out with the arrangement according to Fig. 3 or any equivalent arrangement.

As used in the embodiment depicted in Figure 1, the material is a polymer whose color determining properties are for example characterized by the absorption coefficient Kₚₒₗ(w) of the material and the scattering coefficient Sₜₒₜ(w) of the material. Also, in this example, colorants are added to the material from which the test object is manufactured. The colorants are preferably chosen such that the test object has a deep black color. The colorants involved in this example are two types of dyes, the first dye for example being characterized by the absorption coefficient K_{pig1}(w) and the scattering coefficient S_{pig1}(w), and the second dye being characterized by the absorption coefficient K_{pig2}(w) and the scattering coefficient S_{pig2}(w). In this example, the choice of the dyes is made in block 32.

The absorption coefficient Kₜₒₜ(w) of the material including the colorants and the scattering coefficient Sₜₒₜ(w) of the material including the colorants is calculated in block 33 in a manner known per se, for example as follows:${\text{K}}_{\text{tot}} {\text{(w)=C}}_{\text{pig1}} {\text{K}}_{\text{pig1}} {\text{(w) +C}}_{\text{pig2}} {\text{K}}_{\text{pig2}} {\text{(w) + C}}_{\text{pol}} {\text{K}}_{\text{pol}} \text{(w)}$

Similarly, the total scattering coefficient of the material to which the colorants have been added can for example be calculated according to the following formula known per se:${\text{S}}_{\text{tot}} {\text{(w) = C}}_{\text{pig1}} {\text{S}}_{\text{pig2}} {\text{(w) + C}}_{\text{pig2}} {\text{S}}_{\text{pig2}} {\text{(w) + C}}_{\text{pol}} {\text{S}}_{\text{pol}} \text{(w)}$

In these formulae, C_{pig1}, C_{pig2} and Cₚₒₗ represent the concentrations of the first type of dye, the second type of dye and the polymer, respectively.

Next, in block 30, on the basis of the color characterizing parameters of the selected material of the test object, which are thus known as such, such as the absorption coefficient Kₜₒₜ(w) of the material of the test object and the scattering coefficient Sₜₒₜ(w) of the material of the test object, and on the basis of the reflectance value Rmₜₑₛₜ(w,h,i) measured in block 28, associated with the predetermined at least one viewing angle (h) of the test object, the surface reflection k₁(w,h,i) associated with the at least one predetermined viewing angle (h) under the condition of illumination under the at least one illumination angle (i) is calculated. These calculations can be carried out using a number of different known equations which relate reflectance to the parameters Kₜₒₜ(w) and Sₜₒₜ(w), or to other color determining parameters. One method of calculation uses the Kubelka-Munk equation and Saunderson equations. For example, in block 30.1, on the basis of the known parameters Kₜₒₜ(w) and Sₜₒₜ(w) of the material of the test object, the idealized reflectance value Rᵢ(w) can be calculated on the basis of the Kubelka-Munk equation, known per se, as follows: 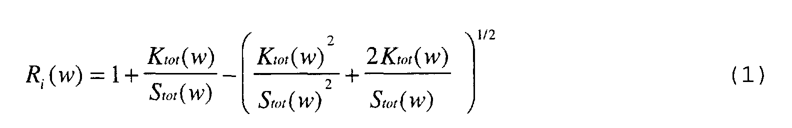 This equation is considered to be valid for diffuse illumination.

Next, in block 30.2, the Saunderson equation, known per se, is used. This equation is also considered to be valid for diffuse illumination. It reads:${\text{R}}_{\text{m}} \text{(} \text{w} \text{) =} {\text{k}}_{\text{1}} \text{(} \text{w} \text{) +} \frac{\left(\text{1-} {\text{k}}_{\text{1}} \left(\text{w}\right)\right) \left(\text{-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}$ In this equation Rm(w) is the angle independent reflectance value as it can be measured in a known manner. (Reflectance Rm(w) is the measured ratio of reflected to incident light flux ). Furthermore, k₁(w) is the fraction of the diffuse incident light which is reflected from the front surface of the sample as known in the art (J.L. Saunderson, J. Optical soc of America, Vol 32, 12, pp. 727-736) and k₂ is the internal surface reflection coefficient (or the fraction of the light incident diffusely upon the surface of the samples from the inside that is reflected). The constant k₂ has been empirically determined many times in the past and lies in the range from 0.4-0.6 and its specific value is not critical to the application of the present invention.

This formula can be rewritten to isolate k₁(w) as a function of Rm(w) and Rᵢ(w):${\text{k}}_{\text{1}} \text{(} \text{w} \text{) =} \frac{\text{Rm} \left(\text{w}\right) \text{-} \frac{\left(\text{1-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}}{\text{1-} \frac{\left(\text{1-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}}$ Equation 3 can be used to calculate k₁(w).In general, 0.4 is typically selected for k₂.

In formula 3, k₁(w) is replaced with k₁(w,h,i) and Rm(w) is replaced with Rmₜₑₛₜ(w,h,i). In other words, it is assumed that formula 3 also has validity for directional illumination in contrast to diffuse illumination, thus determining a viewing and illumination angle-dependent reflection coefficient k₁(w,h,i) on the basis of a viewing and illumination angle-dependent reflectance value Rm(w,h,i). In other words, the equation known per se, which has been assumed to be valid only for the condition of illumination by means of diffuse light) is also considered to be valid for specific viewing angles (h) under the predetermined specific directional illumination conditions. When using the Saunderson equation, in block 30.2 the following formula is then applied:${\text{k}}_{\text{1}} \text{(} \text{w,h,i} \text{) =} \frac{{\text{Rm}}_{\text{test}} \left(\text{w,h}\right) \text{-} \frac{\left(\text{1-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}}{\text{1-} \frac{\left(\text{1-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}}$

Thus, the reflection coefficient k₁(w,h,i) for the at least one viewing angle (h) and illumination angle i, has been calculated.

Presently, in block 34, it is predicted what will be the appearance of an object, in this case the object to be manufactured, when this object has been manufactured from the above-mentioned predetermined material with the above-mentioned predetermined surface texture and with a selection of predetermined colorants. In block 34.1, a first choice is made of colorants which will be added to the material from which the object is manufactured. In this example, we suppose that two kinds of colorants are added. The first colorant is characterized by the absorption coefficient K_{pig1}(w) and the scattering coefficient S_{pig1}(w). The second colorant is characterized by the absorption coefficient K_{pig2}(w) and the scattering coefficient S_{pig2}(w). Further, the material, known as such, from which the object is manufactured is characterized by the scattering coefficient Sₚₒₗ(w) and the absorption coefficient Kₚₒₗ(w). According to the color theory, known as such, presently the absorption coefficient of the material to which the colorants have been added can for example again be calculated as follows:${\text{K}}_{\text{tot}} {\text{(w)=C}}_{\text{pig1}} {\text{K}}_{\text{pig1}} {\text{(w) + C}}_{\text{pig2}} {\text{K}}_{\text{pig2}} {\text{(w) + C}}_{\text{pol}} {\text{K}}_{\text{pol}} \text{(w)}$

Similarly, the total scattering coefficient of the material to which the colorants have been added can for example again be calculated according to the following formula, known per se:${\text{S}}_{\text{tot}} {\text{(w) = C}}_{\text{pig1}} {\text{S}}_{\text{pig2}} {\text{(w) + C}}_{\text{pig2}} {\text{S}}_{\text{pig}} {\text{(w) + C}}_{\text{pol}} {\text{S}}_{\text{pol}} \text{(w)}$

In the formulae 5 and 6, C_{pig1}(w), C_{pig2}(w) and Cₚₒₗ(w) represent the concentrations of, respectively, the first colorant, the second colorant and the polymer from which the object will be manufactured. In this example, the calculation of the values of Kₜₒₜ and Sₜₒₜ is carried out in block 34.2 for at least one wavelength but preferably for a range of wavelengths. Next, on the basis of Kₜₒₜ and Sₜₒₜ, in block 34.3 the idealized reflectance Rᵢ(w) of the object is calculated for at least one wavelength but preferably for a range of wavelengths. When a range of wavelengths is used, a reflectance curve can then be generated. The calculation is carried out on the basis of equations known per se, such as, in this example again, the Kubelka-Munk equation. Multi-flux theories and other color theories can be used as well. The idealized reflectance Rᵢ(w) can thus be calculated on the basis of formula 1.

Next, in block 34.4, on the basis of the idealized reflectance Rᵢ(w) of the object, it is predicted what will be the observed appearance viewed at the predetermined at least one viewing angle (h), by predicting what the reflectance value or curve Rₚ(w,h,i) will be on the basis of the above-mentioned idealized reflectance Rᵢ(w) and the reflection coefficient k₁(w,h,i). This calculation is again carried out with an equation known per se, this equation known per se having been assumed to be valid only for diffuse illumination and defining a relation between the idealized reflectance, an illumination-angle-independent surface reflection k₁(w) and an angle-independent reflectance Rₚ(w). By way of example, the Saunderson equation (formula 2) is used again here, with Rₚ(w,h,i) being determined using this equation by setting Rₚ(w,h,i) = Rm(w) and k₁(w,h,i) = k₁(w) in this equation.

According to the invention, presently formula 2 is converted to:${\text{R}}_{\text{p}} \text{(} \text{w,h,i} \text{) =} {\text{k}}_{\text{1}} \text{(} \text{w,h,i} \text{) -} \frac{\left(\text{1-} {\text{k}}_{\text{1}} \left(\text{w,h,i}\right)\right) \left(\text{1-} {\text{k}}_{\text{2}}\right) {\text{R}}_{\text{i}} \left(\text{w}\right)}{\text{1-} {\text{k}}_{\text{2}} {\text{R}}_{\text{i}} \left(\text{w}\right)}$

Thus it is predicted in block 34.4 what will be the reflectance value Rₚ(w,h,i) or curve of the object to be manufactured.

The question is presently whether with the first choice of the colorants made, the predicted reflectance value Rₚ(w,h,i) at the at least one predetermined viewing angle (h) under the condition of illumination under the illumination angle (i) corresponds with the reflectance curve Rm_{ref}(w,h',i') of the reference object and as determined in block 24. In this example the following selection is made: Rm_{ref}(w,h',i')= Rm_{ref}(w,h,i). In other words, the object to be manufactured should have a reflectance value Rm_{ref}(w,h,i) because of the predetermined demand that h=h' and i=i'. Therefore Rm_{ref}(w,h,i) is compared with Rₚ(w,h,i). This comparison is carried out in block 36 in a manner known per se. When the difference determined in block 36 exceeds a predetermined value, it can be fed back via a line 38 to a block 34.1 where a different choice of type or amount of colorants is made then with a view to reducing the difference referred to. On the basis of new choices, the method steps of blocks 34.1, 34.2, 34.3 and 34.4 are traversed again to obtain a newly calculated reflectance value or curve Rₚ(w,h,i). Thereupon, in block 36, the difference referred to can be determined again. When the difference is still greater than the threshold value referred to, it can again be fed back via line 38 to block 34.1 where a new selection of colorants is made then. This entire process can be repeated a number of times until it appears in block 36 that the difference lies below a predetermined value. In that case, it is known in what way an object can be manufactured, since the choice of the dyes, the concentrations thereof, the choice of the polymer and the concentrations thereof, as well as the surface texture to be manufactured are known.

It holds further that the reflectance curve Rm_{ref}(w,h,i) can for example be used for deriving, in a manner known per se, the known color defining parameters L_{ref}, a_{ref}, b_{ref}. For example the L, a and b values are defined by CIE (see CIE Publication NR 15.2 , 1986 Vienna PO Box 169, Austria) This calculation is carried out in block 42. On the ground of Rₚ(w,h,i) of the object to be manufactured the corresponding values Lₚ,aₚ,bₚ can be determined accordingly. This calculation is carried out in block 42. On the basis of the values calculated in blocks 40 and 42, it is then possible, in block 36, to determine the parameter ΔE(w,h,i), determining said difference according to the formula:$\text{ΔE(w,h,i) =} \sqrt{\text{Δ} {\text{L}}^{\text{2}} \text{+ Δ} {\text{a}}^{\text{2}} \text{+ Δ} {\text{b}}^{\text{2}}}$ with${\text{ΔL=L}}_{\text{p}} {\text{-L}}_{\text{ref}}$${\text{Δa=a}}_{\text{p}} {\text{-a}}_{\text{ref}}$${\text{Δb=b}}_{\text{p}} {\text{-b}}_{\text{ref}}$ Alternatively the Delta E calculation may involve the use of the various other color difference equations known in the art.

It is noted that color matching using color prediction equations as such is known. However, this never involves predicting and matching appearance depending on the viewing and illumination angles. This means that the comparison in block 36, as well as the determination of a new choice of colorants and/or concentrations thereof can be carried out for one predetermined viewing angle (h) associated with at least one predetermined illumination angle with a color match program known per se.

When it is required that the appearance of the reference object and that of the object to be manufactured correspond at more than one specific condition such as a particular set of angles (h,i), the entire process as described hereinbefore may be successively carried out at different conditions such as different sets of angles (h,i).

In a preferred embodiment, the process is conducted using more than one set of angles (h,i). This means that in block 28 the value of Rmₜₑₛₜ(w,h,i) is determined for each set of the angles (h,i). This also holds for the value of Rm_{ref}(w,h',i') in block 24. Next, on the basis of the idealized reflectance Rᵢ(w) determined in block 30.1, in block 30.2 the value of k₁(w,h,i) for each of the set of angles (h,i) is determined. Than according to a first possibility a selection of colorants is made for one set of angles (h,i) as described above (blocks 34 and 36). Next, the differences ΔE(w,h,i) are determined on the bases of selected colorants for all the other sets of angles (h,i) (blocks 34 and 36 for each set of angles (h,i). Then if any of the differences ΔE(w,h,i) exceeds a certain predetermined threshold via line 38 another selection of amount and/or type of colorants can be made. Based on this new selection each of the differences ΔE(w,h,i) may be calculated to check whether they lay all below the associated predetermined thresholds (blocks 34 and 36) for each of the sets of angles (h,i). If any of the differences ΔE(w,h,i) is above its associated threshold another selection of colorants may be made to repeat the process as described above.

The above selections can be carried out both 'by hand' and with the aid of a color match program known per se. It is therefore possible that the values of ΔE(w,h,i) found in block 36 are represented on a display and that in block 34.1 an expert, on the basis of these values, makes a new selection of the colorants and/or the concentrations thereof.

According to another possibility a separate appearance match for each set (h,i) is made by selecting colorants for each set (h,i) as discussed above. On the bases of individual selections of colorants an average selection may be made which provides a match which is sufficient close for all sets (h,i).

If it appears for any of the above described methods that it is impossible to reduce the differences ΔE(w,h,i) to below the predetermined threshold value simultaneously at all angles of interest, adjustment of the surface texture of the object to be manufactured may be considered. This adjustment, at least the choice thereof, can, for instance, be carried out by a specialist. When the surface texture has thus been altered, a new test object with the altered surface texture is manufactured. The new choice of a predetermined surface texture, such as it follows from the difference ΔE(w,h,i) or, in case of several viewing angles, from the differences ΔE(w,h,i), is indicated in Fig. 1 by the line 44. Next, on the basis of the new test object, the entire process as described above is repeated. Eventually, this should lead to a result where for each desired angle, the difference ΔE(w,h,i) lies below the predetermined threshold value associated with the respective angles.

Similarly, in order to reduce the differences ΔE(w,h,i) to below the predetermined threshold value simultaneously at all angles of interest, it may also be decided to change the kind of material from which the sample is made. In the above example this will in general imply that Cₚₒₗ, Sₚₒₗ and Kₚₒₗ changes. Then again a new test object is made and the entire process is traversed again. A change of polymer will in general also result in a change of surface texture. Furthermore, it is also possible to change the sample manufacturing process or process conditions. For example, if the manufacturing process is injection molding, the molding condition may be changed. In an injection molding process also the texture or roughness of the metal tool may be changed. This also affects the surface texture of the plastic sample, so that the entire process may subsequently be traversed as with a change of polymer and/or a change of the surface texture as described above.

It is possible that the values of ΔE(w,h,i) found in block 36 are represented on a display and that in block 34.1 an expert, on the basis of these values, makes a new choice of the colorants and/or the concentrations thereof, and/or surface textures and/or kind of materials.

The difference determination ΔE, which is known per se but does not take the viewing and illumination angles (h,i) into account, can be further generalized, according to the invention, by determining the difference ΔE(h,i;h',i') between the appearance of the test object for the set of (h,i) and the appearance of the reference object for the set (h',i'). The following applies:$\text{ΔE} \text{(} \text{h,i;h',i'} \text{) =} \sqrt{\text{Δ} {\text{L}}^{\text{2}} \text{+ Δ} {\text{a}}^{\text{2}} \text{+ Δ} {\text{b}}^{\text{2}}}$ with${\text{ΔL = L}}_{\text{p}} {\text{(h,i)-L}}_{\text{ref}} \text{(h',i')}$${\text{Δa = a}}_{\text{p}} {\text{(h,i) - a}}_{\text{ref}} \text{(h',i')}$${\text{Δb = b}}_{\text{p}} {\text{(h,i) -b}}_{\text{ref}} \text{(h',i')}$ Formula 9 can then be applied in block 36 for each of the above described methods.
If the appearance of the object to be manufactured should match with the appearance of the reference object under the same at least one viewing angle and under the same conditions for illumination then (h)=(h') and (i)=(i').

On the basis of the example outlined here, it will be clear that parts of the example of Fig. 1 also comprise methods which, based on the insight of the invention, may each be of interest for independent application. Thus, the methods of block 26, 28, 30, 32, 33 are each of interest for independent application with a view to characterizing the contribution of the surface to the appearance of a particular object.

It is possible, as described above, to match the appearance of the material at a given set of viewing/observing angles with that of a reference, by adjusting colorant levels. However, in many cases a matching appearance at one angle does not imply matching at another angle. The following approach will (in some cases) lead to a matching at various angles. It is possible to create surfaces with various finishes. This can be done, for example, by sand-blasting the metal mold used for injection-molding plastic parts, with various types of glass or sand. (This is known). These various surfaces can now be characterized by their k₁(w,h,i) curves. This allows a check as to which curve fits best that of the R_{ref}(w,h,i) to be matched, i.e. which curve allows making a match at various angles. The surface corresponding to this curve can then be selected. Another approach is to study different polymeric materials. For example, ABS materials with different rubber morphology can be selected. These materials will have a different dependence of Reflectance Rₚ(w,h,i) on viewing/observing angle (h). In other words, different polymers will also produce differently shaped k₁(w,h,i) curves as a function of the angles, for a fixed mold surface (for example fixed sand type). Again, we can select that polymer that will allow creating a match with the reference at more than one angle.

An approach to this selection is the following. First calculate a match with a reference object(, with all surfaces and at one set 1 of viewing and illumination angles h and i. (For each surface a slightly different colorant composition may result). Then calculate Rₚ(w,h,i) at a second set 2 of viewing and illumination angles (preferably with at least one of the angles rather different from the angle used before). In this approach, for each surface the corresponding colorant composition found in the first match at set of angles 1 is maintained, one only replaces the k₁(w,h,i) value) corresponding to the new set of angles 2. Subsequently, select that surface that gives the closest match (Rₚ close or equal to R_{ref} )at this second set of angles. (When a good match is reached for a second set of angles, then in many cases matches will be reasonable for all sets of angles. It is also possible to combine surface variation with material variation. A full appearance match over a range of angles then consists in selecting the right polymer, recommending the right surface treatment of the metal mold and calculating the right colorant formulation.

In the manner outlined hereinbefore, therefore, in a very efficient manner, a first choice of the kind of material (the choice of the polymer) and/or a first choice of a surface texture can be made on the basis of which a good match with the reflectance curve R_{ref}(w,h,i) can be obtained. After the first choice of the kind of material and/or the surface texture has thus been made, the kind of colorants and the amounts thereof can be calculated as described hereinbefore for definitively determining in what way the object is to be manufactured in order that the appearance of the object to be manufactured agrees within the predetermined limits with the appearance of the reference object and/or the reference reflectance curves.

The invention is not limited in any way to the embodiments outlined hereinbefore.

In the example given, the test object is manufactured from a material and with a surface texture corresponding with the first choice of a possible kind of material and possible surface texture of the object to be manufactured. It is however also possible that as a first choice the surface contribution to appearance or the at least one surface reflection k₁(w,h,i) for the object is set without the intermediate use of the test object. Hence, in that case block 30.2 in stead of block 26 represents the starting point. Subsequently the method is continued as discussed in relation with figure 1. Again this first choice for the surface contribution to appearance or the surface reflection k₁(w,h,i) may be fixed. However the choice of the surface contribution to appearance or the surface reflection k₁(w,h,i) for the object may also be adjusted in view of the difference information, whereafter the colour matching steps as discussed before are repeated. This process of adjustment may also be repeated until the difference information lies below a predetermined value.

Furthermore the invention applies generally to other color theories than discussed above. Thus, instead of the Saunderson equations and the Kubelka-Munk equation, other equations known per se can be used or can be used after slight modification. Also, instead of the scattering Sₜₒₜ and the absorption Kₜₒₜ, other parameters known per se which characterize the color of the object can be used. What remains, however, is that the prediction of what the color of an object will be, the matching of the appearance of an object with another object, etc., is carried out in each case depending on the sets of angles (h,i) and that surface contribution is separated from internal color.

The surface contributions to appearance, or the surface reflections k₁(w,h,i), may also be calculated from a plurality of reflectance values Rm(w,h,i) which are measured for at least one light frequency w and at least two predetermined viewing angle (h) under the condition of illumination with diffuse light.
It is also possible to predict the appearance of transparent of translucent objects in reflectance or in transmittance in a manner as discussed above. Furthermore the surface reflection value (s) k₁(w,h,i) may be calculated from a knowledge of the surface topology of the given texture of the object.

Such variants are all understood to fall within the scope of the invention.

## Claims

1. A method for **characterizing, by** means of a measurement, the appearance of an object, or more particularly the surface contribution to the appearance of an object, **characterized in that** the surface contribution to appearance, or the surface reflection k₁(w,h,i), is calculated from at least one reflectance value Rm(w,h,i) which is measured for at least one light frequency w ; a predetermined viewing angle (h); and at least one predetermined illumination angle (i).

2. A method according to claim 1, **characterized in that** a plurality of reflection values k₁(w,h,i) corresponding with the respective measured reflectance values R(w,h,i) are calculated.

3. A method according to claim 2, **characterized in that** the surface contributions to appearance, or the surface reflections k₁(w,h,i), are calculated from at least two different reflectance values Rm(w,h,i) which are each measured for a predetermined viewing angle (h) under the condition of illumination with diffuse light wherein said viewing angles differ from each other.

4. A method according to claim 2, **characterized in that** the surface contributions to appearance, or the surface reflections k₁(w,h,i), are calculated from a plurality of different reflectance values Rm(w,h,i) which are each measured for a predetermined set (h,i ) of a viewing angle (h) under the condition of illumination with at least one predetermined illumination angle (i) wherein said sets differ from each other.

5. A method according to any preceding claims, **characterized in that** on the basis of the color determining parameters of the material the idealized reflectance value Rᵢ(w), for the at least one light frequency (w), of the object is calculated wherein on the basis of the idealized reflectance value Rᵢ(w) and the measured at least one reflectance value Rm(w,h,i), the at least one surface reflection k₁(w,h,i) is calculated using an equation from a color theory, which equation has been assumed to be independent of the viewing and illumination angles and defines a relation between the idealized reflectance value Rᵢ(w), the viewing and illumination angle-independent surface reflection k₁(w), and the reflectance value Rm(w) which is measurable independently of the viewing and illumination angles in a manner known per se, with k₁(w,h,i) being calculated by substituting k₁=k₁(w,h,i) and Rm(w)=Rm(w,h,i) in this equation, and subsequently calculating k₁(w,h,i) from this equation.

6. A method according to claims 2 and 5 **characterized in that** each surface reflection k₁(w,h,i) of the plurality of surface reflections k₁(w,h,i) is calculated by solving k₁(w,h,i) from said equation for each value of Rm(w,h,i) and the value of Rᵢ(w).

7. A method according to any preceding claim, **characterized in that** the object has a low reflectance value at at least one wavelength.

8. A method according to any preceding claim, **characterized in that** the object has a dark or preferably a black color.

9. A method for characterizing an objects appearance wherein the object's appearance is **characterized by** color determining parameters of the material, which are dependent on the kind of material and the optional colorants and/or other additives from which the object is manufactured, and the surface contribution to appearance or the value of at least one surface reflection k₁(w,h,i) such as is obtainable according to any of the claims 1-8 for a predetermined viewing angle(h) under the condition of illumination at at least one predetermined illumination angle(i).

10. A method according to claim 9, **characterized in that** based on the color determining parameters of the material from which the object is manufactured and on the basis of the surface contribution to appearance or at least one reflection value k₁(w,h,i) such as is obtainable according to any of the claims 1-8, for a predetermined viewing angle and at least one predetermined illumination angle it is predicted what the appearance of the object will be such as it is observed for the predetermined viewing and illumination angles.

11. A method according to claim 10, **characterized in that** on the basis of the color determining parameters of the material the idealized reflectance value Rᵢ(w) of the object is calculated and that subsequently the prediction of the observed appearances viewed at the at least one viewing angle (h) under the condition of illumination under the at least one illumination angle (i) is carried out by calculating at least one reflectance value Rₚ(w,h,i) such as this would be measured at the at least one viewing angle (h) under the condition of illumination under the at least one illumination angle (i), the reflectance value Rₚ(w,h) being calculated using an equation from a color theory, which equation has been assumed to be independent of the viewing and illumination angles (h,i) and defines a relation between the idealized reflectance value Rᵢ(w), the angle-independent surface reflection k₁(w) and the reflectance value Rₚ(w) that is measurable in the known angle-independent manner, with Rₚ(w,h,i) being calculated for the at least one viewing angle (h) under the condition of illumination under the at least one illumination angle (i) on the basis of this equation by setting Rₚ(w,h,i)=Rₚ(w) and k₁(w,h,i)=k₁(w) in this equation and by subsequently solving Rₚ(w,h,i) from this equation on the basis of the idealized reflectance Rᵢ(w) and the surface reflection k₁(w,h,i).

12. A method according to claim 11, **characterized in that** the at least one reflectance value Rₚ(w,h,i) is calculated using a computer program known per se and is optionally reproduced by representation on, for instance, a display.

13. A method according to any preceding claim 9-12, **characterized in that** for determining the at least one value of k₁(w,h,i), a test object is manufactured from a kind of material and with a predetermined surface texture corresponding with the kind of material and the predetermined surface texture of the object whose appearance is to be predicted, with colorants and/or other additives having optionally been added to the material from which the test object is manufactured, while subsequently on the basis of color determining parameters of the material which are dependent on the kind of material and the optional colorants and/or other additives from which the test object is manufactured, the at least one value of k₁(w,h,i) is obtained according to any of the preceding claims 1-8.

14. A method according to any preceding claims 9-13, **characterized in that** on the basis of the color determining parameters of the material from which the object is manufactured and on the basis of a plurality of reflection values k₁(w,h,i) for a plurality of sets (h,i) of viewing and illumination angles wherein each set comprises a viewing angle (h) and at least one associated illumination angle (i), it is predicted what the appearance of the object will be such as it is observed for the plurality of sets (h,i) of predetermined viewing (h) and illumination angles (i).

15. A method according to claims 13 and 14, **characterized in that** the plurality of surface reflections k₁(w,h,i) are respectively determined on the bases of a plurality of corresponding reflectance values R(w,h,i) of the test object.

16. A method according to any one of the preceding claim 14 or 15, **characterized in that** the test object has a low reflectance value at at least one wavelength.

17. A method according to any preceding claim 14, 15 or 16, **characterized in that** the object has a dark or preferably a black color.

18. A method for making a choice of a type and amount of colorants and/or other additives and/or a choice of a kind of material and/or a choice of surface texture, and/or a choice of a manufacturing process and conditions for manufacturing an object, such that when an object is manufactured on the basis of the choice made, this object, measured from at least one predetermined viewing angle (h) under the condition of illumination under at least one predetermined illumination angle (i), has at least one predetermined reflectance value Rm_{ref}(w,h,i) or a range of reflectance values at a range of wave lengths associated with these angles, the method comprising at least the following steps: A. as a first choice a surface contribution to appearance or at least one surface reflection k₁(w,h,i) for the object is set for at least one predetermined viewing angle (h) under the condition of illumination under at least one predetermined illumination angle (i); B. a first choice is made of the amount and type of colorants and/or other additives from which the object is manufactured; C. based on the surface contribution to appearance or the reflection value (s) k₁(w,h,i), the already chosen kind of material and the choice of the amount and type of colorants and/or additives, it is predicted what the reflectance value(s) Rₚ(w,h,i) associated with the predetermined viewing angle (s) (h) under the condition of illumination under the illumination angle (s)(i) would be on the basis of equations of a color theory, which equations have been assumed to be independent of the viewing and the illumination angles and in combination define a relation between the color determining parameters of the material determined by the kind of material and the type and amounts of colorants, an angle independent surface contribution to appearance or an angle-independent surface reflection k₁(w), and the angle-independent reflectance value Rₚ(w), wherein Rₚ(w,h,i) being determined by substituting the angle- independent surface contribution to appearance or k₁(w)= the angle-dependent surface contribution to appearance or k₁(w,h,i) and Rₚ(w)=Rₚ(w,h,i) in these equations and subsequently calculating Rₚ(w,h,i) from this equation on the basis of the angle-dependent contribution to appearance or the surface reflection k₁(w,h,i) and the color determining parameters of the material which are determined by the chosen kind of material and the chosen colorants and/or other additives; D. the predicted reflectance value Rₚ(w,h,i) is compared with the desired reflectance value Rm_{ref}(w,h,i) to obtain information about a difference between the desired appearance and the predicted appearance of the object to be manufactured at the viewing angle (s)(h) under the condition of illumination under the illumination angle (s)(i); and E. on the basis of the difference information, optionally steps B, C and D are repeated for a different choice of colorants.

19. A method according to claim 18, **characterized in that**, in step A the surface contribution to appearance or the surface reflection k₁(w,h,i) is set based on a first choice of material and a surface texture for the object.

20. A method according to claim 19, **characterized in that** in step A: a test object is manufactured from a material and with a surface texture corresponding with the first choice of a possible kind of material and possible surface texture of the object to be manufactured; and of the test object, the surface contribution to appearance or the value(s) k₁(w,h,i) for a predetermined viewing angle (h) under the condition of illumination under at least one predetermined illumination angle (i) is calculated as described in any one of claims 1-8.

21. A method according to claim 18, **characterized in that**, the surface contribution to appearance or the surface reflection k₁(w,h,i) is fixed.

22. A method according to claims 19 or 20, **characterized in that**, the surface texture is fixed.

23. A method according to any of the claims 19, 20 or 22, **characterized in that**, the kind of material is fixed.

24. A method according to claim 18, **characterized in that** F: optionally the choice of the surface contribution to appearance or the surface reflection k₁(w,h,i) for the object is adjusted in view of the difference information, whereafter the steps B, C, D and E are repeated.

25. A method according to claim 19 or 20, **characterized in that** F: optionally the choice of the surface texture and/or the kind of material of the object to be manufactured is adjusted in view of the difference information, whereafter the value of k₁(w,h,i) is determined again according to step A and steps B, C, D and E are repeated.

26. A method according to claim 25, **characterized in that** step F is repeated until the difference information lies below a predetermined value.

27. A method according to any claim 18-26, **characterized in that** in step C the following steps are carried out: on the basis of the color determining parameters of the material which are determined by the chosen kind of material and the chosen added colorants and/or other additives, using an equation from a color theory, an idealized reflectance value Rᵢ(w) of the object, independent of the viewing and illumination angles h,i, is calculated, and subsequently Rₚ(w,i,h) is calculated using an equation from a color theory, which equation known per se has been assumed to be independent of the viewing and illumination angles (h,i) and defines a relation between the idealized reflectance value Rᵢ(w), the angle-independent surface reflection k₁(w) and the angle-independent reflectance value Rₚ(w) such as it would be measured, with Rₚ(w,h,i) being determined using this equation by setting Rₚ(w,h,i)=Rₚ(w) and k₁(w,h,i)=k₁(w) in this equation and by subsequently solving Rₚ(w,h,i) from this equation on the basis of the idealized reflectance value Rᵢ(w) and the surface reflection k₁(w,h,i).

28. A method according to any of the claims 18-27, **characterized in that** the color determining parameters of the material are calculated on the basis of parameters determining the kind of material, such as the absorption coefficient Kₚₒₗ and the scattering coefficient Sₚₒₗ of the material and parameters of the colorants and/or other additives such as the absorption coefficient K_{pig} and the scattering coefficient S_{pig} of the colorant.

29. A method according to any of the preceding claims 18-28, **characterized in that** steps B, C, D and E are carried out with a color match program known per se.

30. A method according to any of the preceding claims 18-29, **characterized in that** steps A-E are carried out for a plurality of sets of angles (h,i) wherein each set comprises a viewing angle and at least one associated illumination angle.

31. A method according to any of the preceding claims 18-30, **characterized in that**, the at least one predetermined reflectance value Rm_{ref}(w,h,i) is determined on the basis of a reference object.

32. A method according to any preceding claim, **characterized in that** the method is carried out for a plurality or a range of values for the frequency (w).

33. A method, according to any preceding claim, in which the appearance of transparent of translucent objects is predicted in reflectance or in transmittance.

34. A method according to any preceding claim 9,10,11 or 18, wherein the surface reflection value (s) k₁(w,h,i) is calculated from a knowledge of the surface topology of the given texture of the object.

35. A method according to any preceding claim, in which the internal color is illumination and viewing angle dependent.

36. A method according to claim 5, 11, 18 or 27, **characterized in that** each equation is known per se from a known color theory.
